# EUROPEAN PATENT APPLICATION

(11) **EP 4 664 425 A1**
(43) Date of publication of application: **17.12.2025**
(21) Application number: 24181788.1
(22) Date of filing: 12.06.2024
(51) Int. Cl.: G06V 20/59

(54) **SYSTEM AND METHOD FOR DETECTING POTENTIALLY DANGEROUS OBJECTS INSIDE A VEHICLE**

(71) Applicant: Aptiv Technologies AG, 8200 Schaffhausen (CH)
(72) Inventor: WEYERS, Patrick, 44263 Dortmund (DE); BARTH, Alexander, 42929 Wermelskirchen (DE)
(74) Representative: Manitz Finsterwald Patent- und Rechtsanwaltspartnerschaft mbB

(57) **Abstract**

The present disclosure is directed at an Advanced Driver Assistant System, ADAS, for vehicles configured to detect a potentially dangerous object inside a vehicle, the system comprising at least one sensor unit, a processing unit, and an output unit, wherein the sensor unit is configured to monitor at least a part of the interior of the vehicle and to transmit acquired sensor data to the processing unit, and wherein the processing unit is configured to analyze the transmitted sensor data, detect, based on the analyzed sensor data, an object inside the vehicle, classify the detected object as a potentially dangerous object, and trigger the output unit to issue a warning in case the detected object is classified as a potentially dangerous object.

## Description

### FIELD

The present disclosure relates to a system and a method for detecting potentially dangerous objects inside a vehicle.

### BACKGROUND

A loose or broken floor mat or loose objects rolling around in the driver's footwell can hold great potential for danger. Even a soiled floor mat might be unsafe. If the floor mat gets entangled with a pedal or a loose object is stuck under it, the driver might not be able prevent a crash even though he/she was still able to react in time. Therefore, a clean, intact and correctly positioned floor mat is just as important as there being no objects in the footwell.

Additionally, wearing suitable shoes as a driver is not necessary by law in many countries, but the lack of it can affect insurance benefits in case of an accident. Clean and light sport wear have proven to be most suitable for operating a vehicle. In contrast, slippery, muddy, heavy or loose-fitting shoes are less suitable as the driver might slip off or might get a shoe entangled with a pedal. Therefore, the driver of a vehicle should wear suitable shoes while operating it.

Accordingly, there is a need for a system and a method for reliably detecting objects inside a vehicle which have a potential of danger and might degrade a driver's ability to safely operate the vehicle.

### SUMMARY

The present disclosure provides a system and a computer implemented method according to the independent claims. Embodiments are given in the sub-claims, the description and the drawings.

In one aspect, the present disclosure is directed at an Advanced Driver Assistant System, ADAS, for vehicles configured to detect a potentially dangerous object inside a vehicle, the system comprising at least one sensor unit, a processing unit, and an output unit, wherein the sensor unit is configured to monitor at least a part of the interior of the vehicle and to transmit acquired sensor data to the processing unit, and wherein the processing unit is configured to analyze the transmitted sensor data, detect, based on the analyzed sensor data, an object inside the vehicle, classify the detected object as potentially dangerous object, and trigger the output unit to issue a warning in case the detected object is classified as a potentially dangerous object.

The system monitors at least a part of the interior of the vehicle by a sensor unit comprising at least one sensor. Possible positions of the sensor unit monitoring a part of the interior of the vehicle are below the steering wheel, in the seats, in the doors, at the vehicle roof looking at the front rows from above or under the rear-view mirror. These positions are not restricted to the described positions and can be varied in a way that a chosen part of the vehicle is visible.

Based on the acquired sensor data, the system is configured to detect anomalies and dangerous conditions related to objects detected and identified in the interior of the vehicle. The acquired sensor data is forwarded to a processing unit. The processing unit hosts the processing algorithms and related software components to analyze the sensor data, detect the objects and classify the detected objects as potentially dangerous objects.

The processing unit may be part of a dedicated electronic control unit (ECU). The processing unit may also be part of a multi-domain controller or may be an integral part of the sensor unit, for example part of a smart camera. The processing unit may also be part of a cloud setup outside the vehicle.

The output unit is able to trigger a warning, e.g. visual or an acoustic warning. The warning may for example be displayed on a display in the vehicle or may by output by a sound system of the vehicle. The output unit warns or informs the driver about potential dangers caused by objects identified within the interior of the vehicle.

The system reliably detects and classifies objects inside a vehicle which have a potential of danger and warns the driver about the potentially dangerous object or anomaly. The system therefore enhances the driver's ability to safely operate the vehicle and contributes to safe driving of the vehicle.

According to an embodiment, the monitored part of the interior of the vehicle comprises at least the driver's footwell area. Anomalies due to objects in the driver's footwell area like for example a loose or broken floor or foot mat or loose objects rolling around in the driver's footwell can hold great potential for danger. The system may therefore monitor in particular the driver's footwell area and trigger an immediate warning if potentially dangerous objects are detected. For example, the system may immediately recognize a floor mat entangled with a pedal or a loose object stuck under the floor mat and inform the driver accordingly. The driver will then be able to react in time such a dangerous situation.

According to an embodiment, the processing unit is configured to classify the object as a potentially dangerous object based on a detected position of the object, and/or a detected movement of the object, and/or an assigned danger level of the object. A detected object can be classified as a potential danger based on the detected position, e.g. near the pedals of the vehicle. The position of the object can also be tracked in the sensor data over a certain timeframe to check if the object is loose, e.g. rolling around the footwell area. Independent on its position or its movement, the object may also be classified as a potentially dangerous object by assigning a predetermined danger level to certain classes of objects.

According to an embodiment, the potentially dangerous object is an, in particular loose, object in the driver's footwell area, and/or a corrupted floor or foot mat, and/or an inappropriate footwear for driving. Objects in the driver's footwell area can severely affect the driver's ability to safely operate the vehicle, in particular to react in time to situations which require a swift action. Loose object can even be more dangerous than static objects as the driver might not recognize them rolling into the footwell. Depending on the location and/or the movement or "looseness" of objects, the driver can be warned about the objects. Alternatively, any detected object independent of its location or "looseness" can trigger a warning as well.

A not recognized corrupted floor mat can hold great potential for danger when driving the vehicle. A corrupted floor mat may be a loose and/or broken and/or folded and/or wrongly placed floor of foot mat. A dirty foot mat in the driver's footwell area or on the pedals might also cause problems as the driver might slip on it which can cause loss of the control of the vehicle. Therefore, detecting, in particular heavy, soiling of the footwell and/or the pedals also contributes to the safety of the vehicle.

Inappropriate driver's footwear may also contribute to dangerous situations during the operation of the vehicle. Footwear that may not be suitable for driving include for example Flip-Flops, High Heels, plateau shoes, or even bare feet. Also soiling by dirt, mud, wetness, snow, or the like might degrade the suitability of footwear for operating the vehicle and might lead to a classification as inappropriate footwear for driving.

According to an embodiment, the sensor unit comprises at least one camera device configured to provide a plurality of images of the monitored part of the interior of the vehicle. The camera device may comprise one or a plurality of imaging sensors which monitor the part of the interior of the vehicle at a predetermined frame rate. The imaging sensors allow an efficient and cost-effective monitoring of the interior of the vehicle, and, when operated at the predetermined frame rate, an accurate tracking of potentially moving or loose objects inside the vehicle.

According to an embodiment, the camera device is a 2D NIR camera and/or a 2D NIR RGB camera and/or a 3D Time-of-Flight, ToF, camera and/or a 3D stereo camera. Cameras operating in the NIR (near-infrared) may be provided with a high sensitivity. RGB-IR cameras can capture RGB color as well as IR spectrum and therefore provide a fuller spectral coverage of the image data. To enhance the sensitivity of the camera device, the camera device may also be configured with different color filter arrays, e.g. RCCC (Red Clear Clear Clear), Bayer-RGGB, or similar filter arrays. The camera device may be equipped with one or more active illumination sources, for example IR LED or VCSEL (Vertical Cavitiy Surface Emitting Laser) illuminators operating in the infrared light spectrum, e.g. at 850nm or 940nm. The illuminators allow monitoring the interior of the vehicle also in low ambient light conditions. The camera device may also include 3D imaging sensors like a ToF camera, a stereo camera, or a structured light camera. The 3D information can improve the accuracy of the identification and classification of potentially dangerous objects in the imaging data.

According to an embodiment, the processing unit is configured to use a Neural Network and/or a Support Vector Machine (SVM) and/or other machine learning methods and/or image processing tools for analyzing the sensor data, detecting an object and classifying the object as a potentially dangerous object. The Neural Network or other machine learning methods may also be trained to detect dirt, mud, wetness, snow, or similar features in the data. Also traditional computer vision methods may be used for processing imaging data acquired by the sensor unit. For example, wetness in the footwell may be detected by searching the imaging data for overexposed areas related to highly reflective parts caused by wetness of the footwell. The processing unit may also use other algorithms like segmentation, Haar feature detection, Scale-Invariant Feature Transform (SIFT), Histogram of Orientated Gradients (HOG) or other computer vision or machine learning algorithms to identify and classify the objects in the data. Corrupted floor or foot mats may also be detected by performing an edge, corner or blob detection in the data. Anomalies related to loose objects may be identified by a motion detection based on an optical flow determined in the data.

According to an embodiment, the processing unit is configured to identify a driver and a region covering the driver's feet in the sensor data. The system may use the acquired sensor data to recognize a person which drives the vehicle or is going to operate and drive the vehicle, in particular during the person being outside of the vehicle or during the entering process of the vehicle. The system may therefore recognize the driver of the vehicle not only when the driver is already inside the vehicle, but also amongst persons outside of the vehicle and/or amongst persons entering the vehicle. Thereby, the sensor unit may be mounted in a way that its field of view does not include the driver's footwell area, but includes the driver's door. The processing unit may for example use a Neural Network, other machine learning methods or computer vision methods to detect and classify the driver's feet. For example, this may be realized by first detecting persons outside the vehicle when the driver's door is open. Then, the driver is identified and his/her feet are detected, for example by using a landmark detection algorithm or another object detector that focuses only on sensor data which includes and tracks the driver.

According to an embodiment, the processing unit is configured to mask sensor data of the region covering the driver's feet and to disregard said sensor data when detecting an object and classifying a detected object as a potentially dangerous object. For example, when monitoring the footwell of the driver, the system may detect a broken or folded floor or foot mat when the footwell is empty, that is without a person placing feet or other objects in the footwell area. An algorithm analyzing the footwell area to anomalies can then detect damage or folds in the floor mat and classify the floor mat accordingly as a potentially dangerous object. For this detection the algorithm can use image processing techniques, a Neural Network or other machine learning methods to detect and/or classify the sensor data. If feet are present in the sensor data, an additional detection algorithm can be used to detect and localize the feet, and ignore sensor data of these regions in further processing steps.

According to an embodiment, the processing unit is configured to identify the driver's footwear in the sensor data, to classify the driver's footwear as appropriate or inappropriate for driving, and as a potentially dangerous object based on the footwear type and/or the degree of soiling of the footwear. The processing unit may for example localize the feet of the driver in the driver's footwell area, identify the driver's footwear in the area covered by the feet and classify the driver's footwear into the classes "safe for driving" or "not safe for driving". The processing unit may also classify the driver's footwear into more fine-grained classes describing the shoe type like for example sport shoes, boots, High Heels, Flip Flops or bare feet. The classification may for example be realized by a Neural Network classifying the sensor data of the driver's footwell area or sub-images of the area covered by the detected feet. Depending on the classification, the driver may be informed that the footwear might not be suitable for driving. This would be the case for, e.g., Flip Flops, High Heels, plateau shoes or bare feet. Additionally, heavy dirt, mud or snow on footwear or wet footwear can cause problems for operating and driving the vehicle. Therefore, a cleanliness classification may be implemented which detects how dirty the driver's footwear is and classifies the footwear with respect to soiling by dirt, mud, wetness, snow, or the like which might degrade the suitability of the footwear for operating the vehicle. Also this classification may be realized by a Neural Network or other machine learning methods classifying the sensor data of the footwell area or sub-images of the detected feet.

According to an embodiment, the sensor unit is configured to monitor at least the driver's door. The sensor unit may be a single sensor unit which also monitors the driver's footwell area. Alternatively, the system may comprise a sensor unit configured to monitor the driver's door and at least a further sensor unit configured to monitor the driver's footwell area. The system may therefore comprise a cabin sensor and a footwell sensor. The cabin sensor has visibility on the driver door region with visibility to the outside of the vehicle when the driver door is open and may have visibility on the driver's footwell area. The footwell sensor acquires data which is used to identify potentially dangerous objects in the driver's footwell area. The cabin sensor acquires data of persons entering or going to enter the vehicle to operate the vehicle. The cabin sensor may be localized at a position from which the driver's foot wear is visible at least during the entering process of the vehicle. This ensures that the data of the cabin sensor can be used to identify the driver's footwear before the driver has entered the vehicle. If a single sensor unit is used to monitor the driver's door region and the driver's footwell area, the data of the sensor unit may be used to identify potentially dangerous objects in the driver's footwell area and of persons entering or going to enter the vehicle to operate the vehicle.

According to an embodiment, the processing unit is configured to identify, based on data of the sensor unit, a driver entering the vehicle, to identify a region covering the driver's feet, to identify the driver's footwear in the sensor data, to classify the driver's footwear as appropriate or inappropriate for driving and as potentially dangerous object. Person detection may be performed by an object detection algorithm trained to detect persons, a body key point detection algorithm or any other algorithm to detect the position of a person in an image. The identification of the driver out of the detected persons may be done for example by assigning the closest person detected near the driver's door, or by tracking the persons and assigning the detected person that enters the car at some point to the driver's status. The region covering the driver's feet may for example be identified by detecting body key points of the driver, with the driver's feet being part of these detections. When using a camera device having a viewing angle which covers the driver's footwell area as sensor unit, a sub-image may for example be cropped out of the full image around the key points showing the location of the driver's feet. Algorithms like a Neural Network or other machine learning methods may then be used to classify the driver's footwear in these sub-images. The classification may be based on the type of footwear, but also on the condition of footwear with respect to soiling by dirt, mud, wetness, snow, or the like which might degrade the suitability of the footwear for operating the vehicle. In this regard, the driver may also be warned by the system before entering the vehicle that his/her footwear is soiled, as the footwear might soil the driver's footwell area and cause a dangerous situation during driving.

The present disclosure is also directed at the use of the system for detecting a potentially dangerous object inside a vehicle or any of its embodiments described above.

In another aspect, the present disclosure is directed at a computer-implemented method for detecting a potentially dangerous object inside a vehicle, the method comprising the steps of:
- monitoring, by at least one sensor unit, at least a part of the interior of the vehicle and transmitting the acquired sensor data to a processing unit; and the processing unit performing the steps of:
   - analyzing the transmitted sensor data;
   - detecting, based on the analyzed sensor data, an object inside the vehicle;
   - classifying the detected object as potentially dangerous object; and
   - triggering an output unit to issue a warning in case the detected object is classified as potentially dangerous object.

The method may be performed by the system described above or any of its embodiments. The description of the system and its embodiments applies accordingly.

The method monitors a part of the interior of the vehicle, identifies potentially dangerous objects and warns the driver about potential dangers regarding said objects. The method may in particular monitor the driver's footwell area and/or the driver's door, and may further classify the footwear of the driver optically, with one or more camera devices mounted in a vehicle cabin. The method may monitor the driver's door, identify a driver before entering the vehicle, detect the feet of the driver while entering the vehicle and classify his/her footwear into suitable and not suitable footwear for operating a vehicle. The method may inform the driver about potential dangers regarding the floor mat or objects in the driver's footwell area. The method may monitor the driver's footwell area, detect the feet of the driver and classify his/her footwear into suitable and not suitable footwear for operating a vehicle. The above classifications may be based on the type of footwear, but also on the condition of footwear with respect to soiling by dirt, mud, wetness, snow, or the like which might degrade the suitability of the footwear for operating the vehicle. In case non-suitable footwear is detected, the method may remember the driver to wear suitable footwear or may warn the driver that the current footwear might not be safe to drive with or might cause dangerous situations in the driver's footwell area. In addition, the method may detect dangerous conditions related to objects in the driver's footwell area, including floor or foot mats, bottles, or other objects.

### DRAWINGS

Exemplary embodiments and functions of the present disclosure are described herein in conjunction with the following drawings, showing schematically:
- Fig. 1: Schematic views of a vehicle equipped with an embodiment of the system
- Fig. 2: Two examples of images of the driver's footwell area
- Fig. 3: Examples of potentially dangerous objects in the drive's footwell area
- Fig. 4: Further examples of a potentially dangerous object in the driver's footwell area
- Fig. 5: Flowchart of an embodiment of the method for detecting potentially dangerous objects inside a vehicle
- Fig. 6: Examples of a body key point and skeleton detection in an image sequence

### DETAILED DESCRIPTION

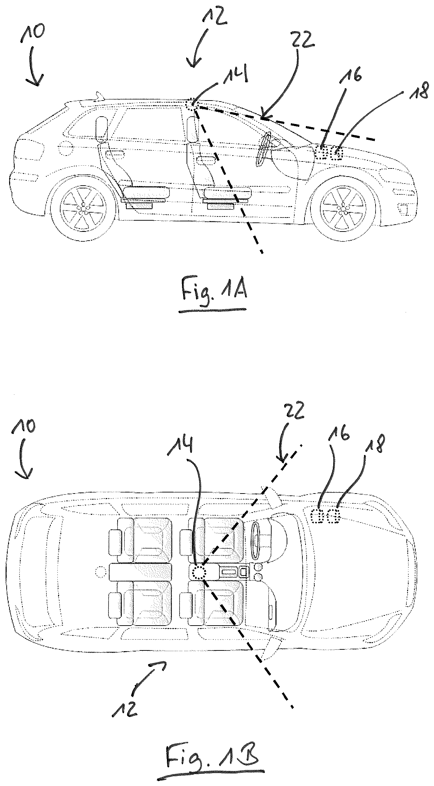

Figs. 1A and 1B depict schematic side and top views of a vehicle 10 equipped with an embodiment of a system 12 according to the present disclosure. The system 12 comprises a camera 14, a processing unit 16 and an output unit 18. The camera 14 may for example be a 2D NIR or a 2D RGB-IR camera which monitors the driver's footwell area 20 at a given frame rate. The camera may also be a 3D Time-of-Flight (ToF) camera or a 3D stereo camera. Also shown is the field of view 22 of the camera 14 monitoring the driver's footwell area 18.

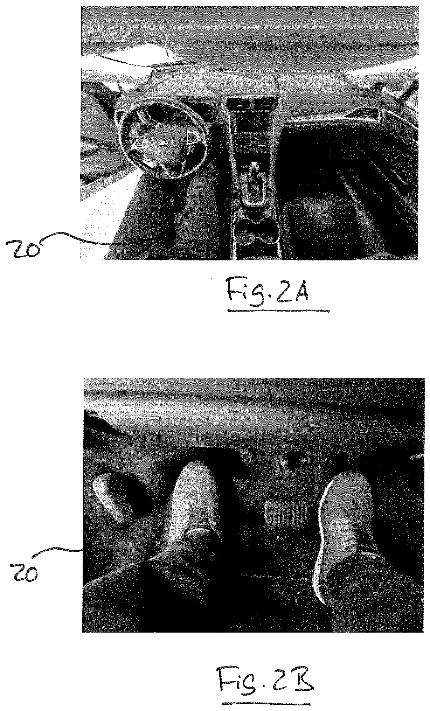

The camera 14 may for example be located below the steering wheel, in the seats, in the doors, at the vehicle roof looking at the front rows from above or under the rear-view mirror. Fig. 2A and 2B show two examples of images of the driver's footwell area 20 taken by a camera 14 located at the vehicle roof (Fig. 2A) and below the steering wheel (Fig. 2B).

The camera 14 is configured to transmit acquired imaging data to the processing unit 16. The processing unit 16 is configured to analyze the transmitted imaging data, detect, based on the analyzed sensor data, an object inside the vehicle 10, classify the detected object as a potentially dangerous object, and trigger the output unit 18 to issue a warning in case the detected object is classified as potentially dangerous object. The warning may in particular be a visual or an acoustic warning. The warning may for example be displayed on a not shown display in the vehicle 10 or may by output by a not-shown sound system of the vehicle 10. The output unit 18 warns or informs the driver about potential dangers caused by objects identified within the interior of the vehicle 10.

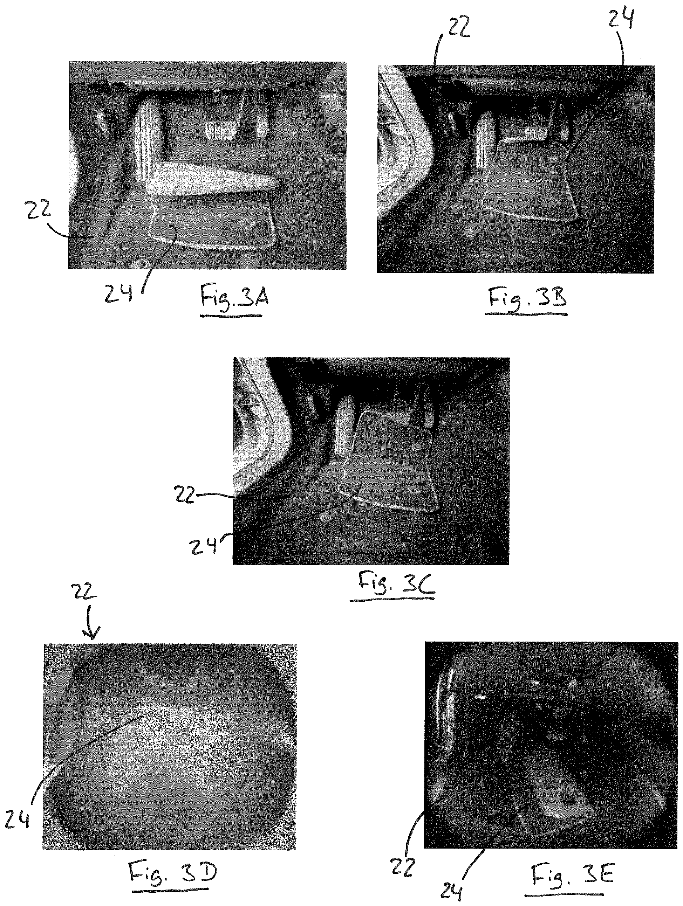

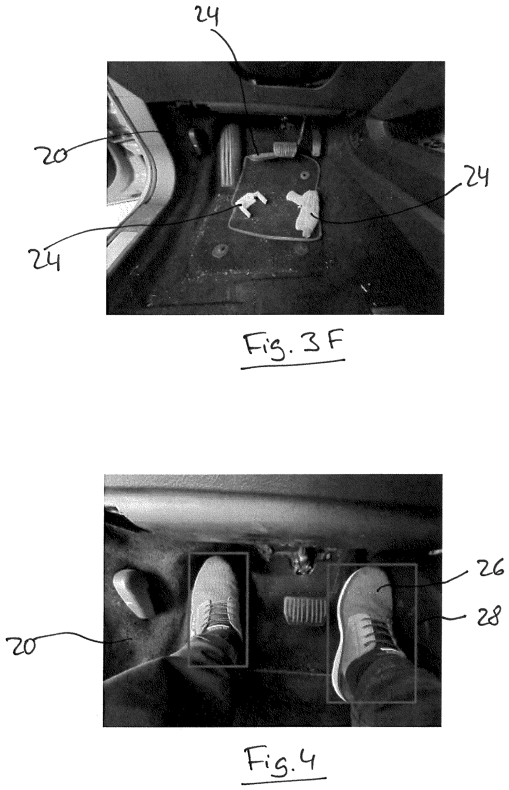

Fig. 3A to 3F show further examples of images acquired by the camera 14 and including potentially dangerous objects 24 located in the driver's footwell area 20. Fig. 3A to 3C show RGB images of corrupted floor or foot mats in the driver's footwell area 20. The folded (Fig. 3A and 3B) or wrongly placed (Fig. 3C) floor mats might pose a danger for safely operating the vehicle 10 and therefore are classified by the system 12 as potentially dangerous objects 24. Figs. 3D and 3E show 3D ToF images of corrupted floor mats in the driver's footwell area 20 which also are classified by the system 12 as potentially dangerous objects 24. Thereby, Fig. 3D represents a ToF depth image and Fig. 3E a ToF amplitude image of the driver's footwell area 20. Fig. 3F shows a RGB image of plastic toys and a folded floor mat in the driver's footwell area 20 which both will affect the driver's ability to safely drive and therefore are classified as potentially dangerous objects 24 by the system 12.

The processing unit 16 may be part of a dedicated electronic control unit (ECU) of the vehicle 10. The processing unit 16 may also be part of a multi-domain controller or may be an integral part of the sensor unit 14, for example part of a smart camera. In other embodiments, the processing unit 16 may also be part of a cloud setup outside the vehicle 10.

The processing unit 16 may for example use a Neural Network and/or a Support Vector Machine (SVM) and/or image processing tools for analyzing the imaging data acquired by the camera 14, detecting an object and classifying the object as a potentially dangerous object 24.

The processing unit 16 may classify the object as a potentially dangerous object 24 based on a detected position of the object, and/or a detected movement of the object, and/or an assigned danger level of the object. A detected object can be classified as a potential danger based on the detected position, e.g. near the pedals of the vehicle 10. The position of the object can also be tracked in the image data over a certain timeframe to check if the object is loose, e.g. rolling around the driver's footwell area 20. Independent on its position or its movement, the object may also be classified as a potentially dangerous object 24 by assigning a predetermined danger level to certain classes of objects.

Additionally, the processing unit 16 identifies the driver's footwear 26 in the imaging data, and then classifies the driver's footwear 26 as appropriate or inappropriate for driving and as a potentially dangerous 24 object based on the footwear type and/or the degree of soiling of the footwear 26. The processing unit 16 localizes the feet 28 of the driver in the driver's footwell area 20, identifies the driver's footwear 26 in the area covered by the driver's feet 28 and classifies the driver's footwear 26 into the classes "safe for driving" or "not safe for driving". Fig. 4 shows an example of an identification of the area covered by the driver's feet 28 in the RGB image of the driver's footwell area 20 of Fig. 2B. In this particular case, the processing unit 16 classifies the identified footwear 26 of the driver as "safe for driving" and therefore not as a potentially dangerous object.

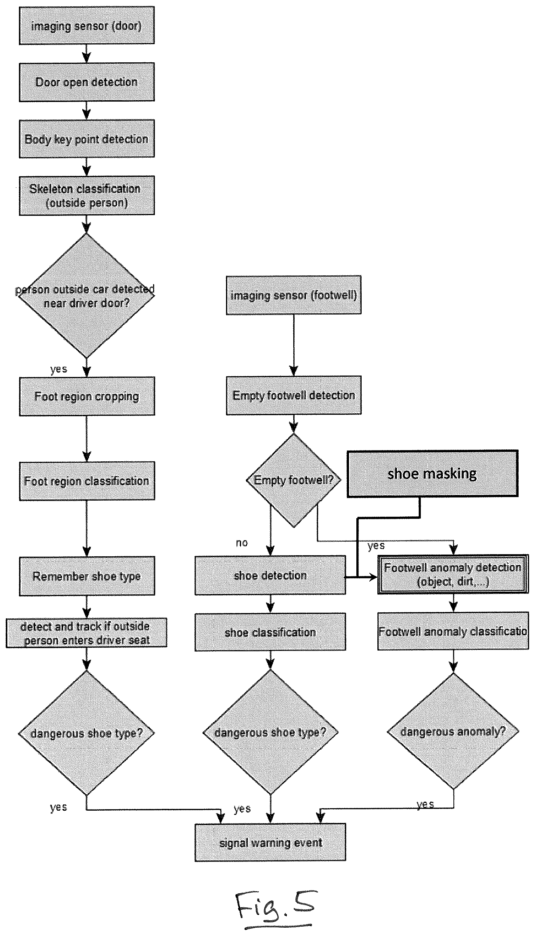

Fig. 5 shows a flowchart of an embodiment of a computer-implemented method for detecting a potentially dangerous object 24 inside a vehicle 10 which uses another embodiment of the system 12. The present embodiment is similar to the previous embodiment but comprises two cameras instead of one camera. A first camera 14A, named "imaging sensor (footwell)" in Fig. 5, monitors the driver's footwell area 20 similar to the camera 14 of the embodiment of Fig. 1B. The second camera 14B, named "imaging sensor (door)" in Fig. 5, has visibility on the driver door region with visibility to the outside of the vehicle 10 when the driver door is open. The second camera 14B may additionally also monitor the driver's footwell area 20. Alternative embodiments may use only the first camera 14A or the second camera 14B, or include additional cameras for monitoring further parts of the interior of the vehicle 10.

The first camera 14A acquires imaging data which is used to identify potentially dangerous objects 24 in the driver's footwell area 20. The second camera 14B acquires additional imaging data of persons entering or going to enter the vehicle 10 and to operate the vehicle 10. The second camera 14B may be localized at a position from which the driver's foot wear 26 is visible at least during the entering process of the vehicle 10. This ensures that the imaging data of the second camera 14B can be used to identify the driver's footwear 26.

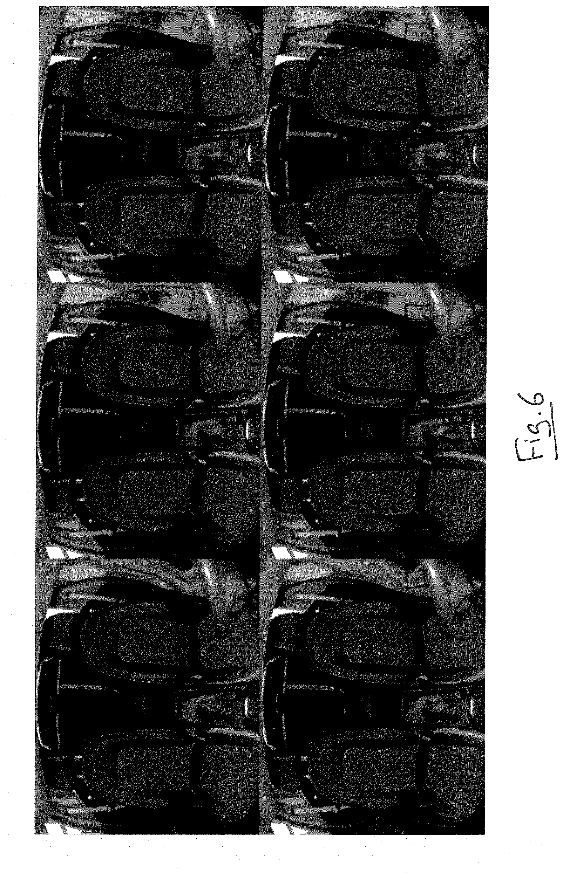

Referring to the flowchart of Fig. 5, the second camera 14B monitors the interior of the vehicle 10 including the driver door region. If the door of the vehicle 10 is opened, a not shown sensor detecting that the door is open triggers the processing unit 16 to perform a body key point detection in the acquired images. Once body key points have been detected, a skeleton classification is performed to identify a person outside the vehicle 10. The steps of body key point detection and skeleton classification may also be combined in a single step performing both tasks. Fig. 6 depicts an image sequence from the second camera 14B showing a person entering the vehicle 10. In the top row, body key points, as identified by the processing unit 16, are visualized, while in the bottom row the detected area covered by the person's feet are visualized. If the detected person is near the driver door, sub-images of the person's foot region 28 are created and used for identifying and classifying the person's footwear 26. The classification result is stored for a potential later use. The position of the person outside the vehicle 10 is tracked in the imaging data of the second camera 14B to detect if the person enters the driver seat. As the person is assigned the driver status, the stored classification of his/her footwear 26 is checked whether the footwear 26 corresponds to a dangerous shoe type. If this is the case, the driver's footwear 26 is classified as inappropriate and as a potentially dangerous object 24. Consequently, the processing unit 16 triggers the output unit 18 to output a warning to the driver. The classification of the footwear 26 as a potentially dangerous object 24 may be based on the type of footwear 26, but also on the condition of footwear 26 with respect to soiling by dirt, mud, wetness, snow, or the like which might degrade the suitability of the footwear 26 for operating the vehicle 10. In this regard, the output unit 18 may also warn the driver before entering the vehicle 10 that his/her footwear 26 is soiled, as this might soil the driver's footwell area 20 and cause a dangerous situation during driving.

In the right branch of the flowchart of Fig. 5, the first camera 14A monitors the driver's footwell area 20. As first step in the detection of potentially dangerous objects 24, it is determined in the imaging data whether the driver's footwell area 20 is empty or whether feet may be identified in the images.

If no feet are identified, the driver's footwell 20 is regarded as empty. The processing unit 16 then continues with identifying objects in the images of the driver's footwell area 20 and classifying the identified objects. If an identified object is classified as a potentially dangerous object 24, the processing unit 16 triggers the output unit 18 to output a warning to the driver.

If feet are present in the imaging data of the driver's footwell area 20, the processing unit 16 may localize a region covered by the driver's feet 28 and mask the respective region in the images of the first camera 14A. The masked images which ignore regions covered by the driver's feet 28 are then used for identifying and classifying objects in the driver's footwell area 20.

For classification of the driver's footwear 26, images of an occupied and therefore not-empty footwell area 20 are used to identify a region covered by the driver's feet 28, similar to the procedure shown in Fig. 4. Sub-images of the driver's foot region 28 may then be created and used for identifying and classifying the driver's footwear 26. If the classification relates to a dangerous shoe type, i.e. an inappropriate footwear 26 for driving, the processing unit 16 triggers the output unit 18 to output a warning to the driver. The classification of the footwear 26 may be based on the type of footwear 26, but also on the condition of footwear 26 with respect to soiling by dirt, mud, wetness, snow, or the like which might degrade the suitability of the footwear 26 for operating the vehicle 10.

The system 10 and the method reliably detect and classify objects inside a vehicle which have a potential of danger and warn the driver about the potentially dangerous object or anomaly. The system and the method therefore enhance the driver's ability to safely operate the vehicle and contribute to safe driving of the vehicle.

### Reference numeral list

- 10: vehicle
- 12: system
- 14: sensor unit/camera
- 14A: first camera
- 14B: second camera
- 16: processing unit
- 18: output unit
- 20: driver's footwell area
- 22: field of view
- 24: potentially dangerous object
- 26: driver's footwear
- 28: driver's foot region

## Claims

1. Advanced Driver Assistant System (12), ADAS, for vehicles configured to detect a potentially dangerous object inside a vehicle (10), the system (12) comprising:
at least one sensor unit (14, 14A, 14B),
a processing unit (16), and
an output unit (18),
wherein the sensor unit (14, 14A, 14B) is configured to monitor at least a part of the interior of the vehicle (10) and to transmit acquired sensor data to the processing unit (16), and
wherein the processing unit (16) is configured to:
analyze the transmitted sensor data,
detect, based on the analyzed sensor data, an object inside the vehicle,
classify the detected object as a potentially dangerous object (24), and
trigger the output unit (18) to issue a warning in case the detected object is classified as a potentially dangerous object (24).

2. The system (12) of claim 1, wherein the monitored part of the interior of the vehicle (10) comprises at least the driver's footwell area (20).

3. The system (12) of claim 1 or 2, wherein the processing unit (16) is configured to classify the object as a potentially dangerous object (24) based on a detected position of the object, and/or a detected movement of the object, and/or or an assigned danger level of the object.

4. The system (12) of any one of the preceding claims, wherein the potentially dangerous object (24) is an, in particular loose, object in the driver's footwell area (20), and/or an inappropriate footwear (26) for driving, and/or a corrupted floor or foot mat.

5. The system (12) of any one of the preceding claims, wherein the sensor unit (14, 14A, 14B) comprises at least one camera device configured to provide a plurality of images of the monitored part of the interior of the vehicle (10).

6. The system (12) of claim 5, wherein the camera device (14, 14A, 14B) is a 2D NIR camera and/or a 2D NIR RGB camera and/or a 3D Time-of-Flight, ToF, camera or a 3D stereo camera.

7. The system (12) of any one of the preceding claims, wherein the processing unit (16) is configured to use a Neural Network and/or a Support Vector Machine, SVM, and/or other machine learning methods and/or image processing tools for analyzing the sensor data, detecting an object and classifying the object as a potentially dangerous object (24).

8. The system (12) of any of the preceding claims, wherein the processing unit (16) is configured to identify a driver and a region covering the driver's feet (28) in the sensor data.

9. The system (12) of claim 8, wherein the processing unit (16) is configured to mask sensor data of the region covering the driver's feet (28) and to disregard said sensor data when detecting an object and classifying a detected object as a potentially dangerous object (24).

10. The system (12) of any one of claims 4 to 9, wherein the processing unit (16) is configured to identify the driver's footwear (26) in the sensor data and to classify the driver's footwear (26) as appropriate or as inappropriate for driving and as potentially dangerous object (24) based on the footwear (26) type and/or the degree of soiling of the footwear (26).

11. The system (12) of any one of the preceding claims, wherein the sensor unit (14, 14A, 14B) is configured to monitor at least the driver's door.

12. The system (12) of claim 11, wherein the processing unit (16) is configured to identify, based on data of the sensor unit (14, 14A, 14B), a driver entering the vehicle (10), to identify a region covering the driver's feet (28), to identify the driver's footwear (26) in the sensor data and to classify the driver's footwear (26) as appropriate or inappropriate for driving.

13. Use of the system (12) of any one of claims 1 to 12 for detecting a potentially dangerous object (24) inside a vehicle (10).

14. Computer-implemented method for detecting a potentially dangerous object (24) inside a vehicle (10), the method comprising the steps of:
- monitoring, by at least one sensor unit (14, 14A, 14B), at least a part of the interior of the vehicle (10) and transmitting the acquired sensor data to a processing unit (16); and the processing unit (16) performing the steps of:
- analyzing the transmitted sensor data;
- detecting, based on the analyzed sensor data, an object inside the vehicle (10);
- classifying the detected object as a potentially dangerous object (24); and
- triggering an output unit to issue a warning in case the detected object is classified as a potentially dangerous object (24).
